# DEMANDE DE BREVET EUROPEEN

(11) **EP 3 694 296 A1**
(43) Date de publication de la demande: **12.08.2020**
(21) Numéro de dépôt: 20155694.1
(22) Date de dépôt: 05.02.2020
(51) Int. Cl.: H05B 6/06

(54) **PROCEDE DE DETERMINATION D'UNE PUISSANCE MINIMALE CONTINUE INDUITE DANS UN RECIPIENT**

(30) Priorité: 06.02.2019 FR 1901186
(71) Demandeur: Groupe Brandt, 92500 Rueil-Malmaison (FR)
(72) Inventeur: GOUMY, Cédric, 45130 HUISSEAU-SUR-MAUVES (FR); ANDRE, Xavier, 45380 LA CHAPELLE ST MESMIN (FR)
(74) Mandataire: Santarelli

(57) **Abrégé**

Un dispositif de détermination d'une puissance minimale continue induite dans un récipient associé à des moyens d'induction, lesdits moyens d'induction étant intégrés à un circuit résonant (L, C) alimenté par un dispositif d'alimentation à onduleur comportant un interrupteur (IGBT) et une diode de roue libre (D) montée en parallèle avec l'interrupteur (IGBT), l'interrupteur (IGBT) étant commandé à une fréquence de commutation, comprend ...
- des moyens de mesure (20) d'un courant (i) circulant dans l'interrupteur (IGBT) et la diode de roue libre (D) ;
- des moyens de génération (40) d'un signal de niveau (SWITCH) indiquant si, lors d'une période de temps (Tr) au début d'une période de commutation (T), le courant mesuré présente une valeur égale à une valeur seuil maximale prédéterminée ; et
- des moyens de sélection (50) d'une fréquence de commutation maximale correspondant à la fréquence à laquelle est commandé l'interrupteur (IGBT) lorsque le signal de niveau (SWITCH) est généré.

## Description

La présente invention concerne un procédé de détermination d'une puissance minimale continue induite dans un récipient associé à des moyens d'induction.

Elle concerne également un dispositif de détermination adapté à mettre en œuvre le procédé de détermination, ainsi qu'un appareil de cuisson à induction comportant un tel dispositif de détermination d'une puissance minimale continue.

La présente invention s'applique en particulier à des appareils de cuisson à induction dans lesquels chaque zone ou foyer de cuisson est piloté par un seul élément de puissance intégré dans un dispositif d'alimentation à onduleur.

Un tel dispositif d'alimentation à onduleur est notamment décrit dans le document WO 2007/042315 dans lequel les moyens d'induction intégrés à un circuit résonant sont alimentés à partir d'un dispositif d'alimentation à onduleur comportant un interrupteur, du type d'un transistor commandé en tension, connu sous l'appellation IGBT (acronyme du terme anglais "*Insulated Gate Bipolar Transistor*"), monté en série avec le circuit résonant.

Cet interrupteur est lui-même monté en parallèle avec une diode de roue libre.

Un tel dispositif d'alimentation à onduleur fonctionne selon une fréquence de commutation correspondant à la fréquence de commutation de l'interrupteur. La fréquence de commutation du dispositif d'alimentation correspond à une période de commande ou de commutation T.

Cet interrupteur est également associé à un rapport cyclique de conduction Δ, Δ inférieur à 1, défini de telle sorte que l'interrupteur est commuté en position ON pendant une durée ΔT de la période de commande T. Cette durée ΔT est représentative de la période de conduction de l'interrupteur pour chaque période de commande T.

En modifiant la fréquence de commutation du dispositif d'alimentation à onduleur, il est possible d'ajuster la puissance instantanée délivrée par les moyens d'induction à un récipient de cuisson.

Dans un tel appareil de cuisson à induction, la puissance instantanée induite dans un récipient est limitée par une puissance maximale continue et une puissance minimale continue liées au fonctionnement de l'interrupteur de puissance, du type IGBT.

En particulier, la puissance maximale continue pouvant être induite dans un récipient donné est limitée par la tension maximale admissible entre les bornes de l'interrupteur.

Par ailleurs, la puissance minimale continue pouvant être induite dans le récipient est également limitée par la topologie de l'interrupteur. En particulier, la puissance minimale continue pouvant être induite dans le récipient est limitée par un pic de courant généré dans l'interrupteur à la mise sur ON (ou mise ON) de celui-ci.

En effet, en fin de période de conduction de l'interrupteur, le courant circulant dans le circuit résonant alimenté par le dispositif d'alimentation à onduleur oscille librement jusqu'à la prochaine mise ON de l'interrupteur, c'est-à-dire jusqu'au début de la prochaine période de commutation ou de commande T.

Tant que ce courant est suffisamment important, la tension aux bornes de l'interrupteur s'annule et la diode de roue libre devient passante en début de période de commutation.

A l'inverse, si le courant est trop faible, la tension aux bornes de l'interrupteur reste positive et la diode de roue libre est bloquée au début de la période de commutation.

Dans ce cas, un pic de courant est observé dans l'interrupteur, du fait de la décharge du condensateur de résonance prévue dans le circuit résonant.

On connaît des méthodes permettant de déterminer la puissance minimale continue pouvant être induite dans un récipient associé à des moyens d'induction consistant à déterminer la fréquence de commutation à laquelle le courant circulant dans la diode de roue libre est sensiblement nul au début d'une période de commutation de l'interrupteur.

Ainsi, la puissance minimale continue correspond à une fréquence de commutation à laquelle la diode de roue libre ne conduit plus ou très faiblement pendant la période de conduction de l'interrupteur.

Toutefois, si cette puissance minimale continue est supérieure à la valeur de puissance de consigne demandée, l'alimentation en puissance du récipient doit être découpée dans le temps afin d'atteindre en moyenne la puissance de consigne demandée.

Ce découpage dans le temps de l'alimentation en puissance du récipient est mal ressenti par l'utilisateur qui constate un chauffage par à-coups du contenu du récipient.

Par ailleurs, ce découpage génère un niveau de bruit important au niveau de la commande de fonctionnement du dispositif d'alimentation à onduleur.

On connaît d'autres méthodes telle que celle décrite dans le document EP 2 341 757, qui profitent de la capacité qu'a l'interrupteur de puissance, à supporter des pics de courant importants, tant que ces pics de courant circulant dans l'interrupteur sont limités dans le temps.

Dans la méthode décrite par ce document, la fréquence de commutation maximale est déterminée comme étant la fréquence du dispositif d'alimentation lorsque la valeur du courant circulant dans l'interrupteur correspond au pic de courant maximal supporté par l'interrupteur. En tolérant que le courant circulant dans l'interrupteur puisse atteindre le pic de courant maximal supporté par l'interrupteur, la puissance minimale continue induite dans le récipient atteint des valeurs plus faibles que celles obtenues par d'autres méthodes, élargissant ainsi la plage de fonctionnement du dispositif d'alimentation.

Pour la mise en œuvre de cette méthode, le courant circulant dans l'interrupteur et la diode de roue libre est mesuré de façon à être surveillé et à détecter lorsqu'il atteint une valeur seuil maximale prédéterminée correspondant au pic de courant maximal admissible par l'interrupteur.

Le courant circulant dans l'interrupteur peut atteindre la valeur seuil maximale prédéterminée lorsqu'un pic de courant se produit à la mise sur ON ou commande de l'interrupteur mais aussi à d'autres moments pendant la période de commutation.

Néanmoins, pour la détermination de la puissance minimale continue induite dans un récipient, seul le pic de courant se produisant à la mise sur ON de l'interrupteur doit être pris en compte.

Or, les dispositifs de mesure du courant utilisés dans cette méthode ne font pas de distinction entre le pic de courant à la mise sur ON de l'interrupteur et d'autres courants dépassant la valeur de seuil maximale, tels que des courants d'inducteur à la fin de la période de conduction de l'interrupteur.

La présente invention a pour but de proposer un procédé amélioré de détermination d'une puissance minimale continue induite dans un récipient, permettant d'abaisser la valeur de la puissance minimale continue pouvant être induite dans un récipient associé à des moyens d'induction.

A cet effet, la présente invention concerne un procédé de détermination d'une puissance minimale continue induite dans un récipient associé à des moyens d'induction, les moyens d'induction étant intégrés à un circuit résonant alimenté par un dispositif d'alimentation à onduleur comportant un interrupteur monté en série avec le circuit résonant et une diode de roue libre montée en parallèle avec l'interrupteur, l'interrupteur étant commandé à une fréquence de commutation.

Selon l'invention, le procédé de détermination comprend les étapes suivantes :
- mesure d'un courant circulant dans l'interrupteur et la diode de roue libre ;
- génération d'un signal de niveau à un état prédéfini indiquant que le courant mesuré présente une valeur égale à une valeur seuil maximale prédéterminée admissible dans l'interrupteur, si, lors d'une période de temps au début de la période de commutation de l'interrupteur, ledit courant mesuré présente une valeur égale à la valeur seuil maximale prédéterminée, la génération n'étant mise en oeuvre que lors de cette période de temps et cette période de temps étant strictement inférieure à la période de conduction de l'interrupteur, la période de conduction de l'interrupteur étant la période de temps pendant laquelle un courant circule dans l'interrupteur ; et
- sélection d'une fréquence de commutation maximale correspondant à la fréquence à laquelle est commandé l'interrupteur lorsque le signal de niveau est généré à l'état prédéfini.

Ce procédé de détermination de la puissance minimale continue permet de profiter de la capacité qu'a l'interrupteur à supporter des pics de courants importants pour pouvoir sélectionner une puissance minimale continue induite dans un récipient de valeur inférieure à celle déterminée par d'autres méthodes utilisées, élargissant ainsi la plage de fonctionnement du dispositif d'alimentation.

Dans le procédé proposé par l'invention, lorsque lors d'une période de temps au début d'une période de commutation de l'interrupteur, un pic de courant de valeur correspondant à la valeur seuil maximale prédéterminée circule dans l'interrupteur, la fréquence de commutation maximale est sélectionnée. Cette fréquence de commutation maximale correspond à une puissance minimale continue induite dans un récipient.

En dehors de la période de temps au début de la période de commutation, la sélection de fréquence de commutation maximale ne peut pas être mise en œuvre, bien que des courants mesurés présentent la valeur seuil maximale prédéterminée.

Par conséquent, seuls les courants atteignant la valeur seuil maximale prédéterminée en début d'un période de commutation sont pris en compte pour la détermination de la puissance minimale continue induite dans un récipient. Ainsi, la présence d'autres courants dépassant la valeur seuil maximale prédéterminée tels que des courants d'inducteur ne gêne pas la détermination de la puissance minimale continue induite dans un récipient.

Selon une caractéristique, le procédé de détermination comporte une étape de variation de la fréquence de commutation dans une plage de fréquences déterminée.

La fréquence de commutation est variée afin de parcourir la plage de fréquences et pouvoir surveiller la valeur du courant mesuré dans l'interrupteur.

Selon une caractéristique, la plage de fréquences est comprise entre une première fréquence de commutation et ladite fréquence de commutation maximale sélectionnée, la fréquence de commutation maximale étant supérieure à la première fréquence de commutation, la première fréquence de commutation correspondant à celle pour laquelle le courant circulant dans la diode de roue libre est sensiblement nul au moment où la tension aux bornes de l'interrupteur s'annule.

Selon un mode de réalisation, la fréquence de commutation est augmentée progressivement au-delà de la première fréquence de commutation.

Selon une caractéristique, la période de temps au début d'une période de commutation présente une valeur comprise entre une valeur minimale correspondant à une période minimale pendant laquelle un premier pic de courant peut survenir à la commande de l'interrupteur, et une valeur maximale strictement inférieure à la période de conduction de l'interrupteur.

Dans un mode de réalisation, la période de temps au début d'une période de commutation présente une valeur comprise entre 1 et 5 microsecondes environ.

Bien entendu, ces valeurs donnent un ordre de valeur que la période de temps peut présenter, et ne doivent pas être comprises comme des valeurs précises.

Selon une caractéristique, la période de temps correspond à un délai généré à partir d'un signal de commande indicatif de la commande ou mise sur ON de l'interrupteur.

Selon une caractéristique, le signal de commande a une période égale à la période de commutation et présente un premier état lorsqu'un courant circule dans l'interrupteur, et un second état lorsqu'aucun courant ne circule dans l'interrupteur.

Ainsi, le signal de commande se trouve dans le premier état lorsque l'interrupteur se trouvent en état ON ou état de conduction et dans le second état lorsqu'il se trouve en état OFF ou ne conduit pas.

Selon une caractéristique, le procédé de détermination comporte une étape de maintien du signal de niveau à l'état prédéfini indiquant que le courant mesuré présente une valeur égale à la valeur seuil maximale prédéterminée pendant une période de commutation de l'interrupteur.

Ainsi, si lors de la période de temps en début de la période de commutation du transistor, le courant mesuré dans l'interrupteur est égal à la valeur de commutation maximale prédéterminée et que le signal de niveau est généré à un état prédéfini indiquant ceci, cet état prédéfini est maintenu jusqu'à ce que la période de commutation de l'interrupteur s'écoule.

L'invention concerne selon un deuxième aspect, un dispositif de détermination d'une puissance minimale continue induite dans un récipient associé à des moyens d'induction, lesdits moyens d'induction étant intégrés à un circuit résonant alimenté par un dispositif d'alimentation à onduleur comportant un interrupteur monté en série avec le circuit résonant et une diode de roue libre montée en parallèle avec l'interrupteur, l'interrupteur étant commandé à une fréquence de commutation.

Selon l'invention, le dispositif de détermination comprend :
- des moyens de mesure d'un courant circulant dans ledit interrupteur et ladite diode de roue libre ;
- des moyens de génération d'un signal de niveau à un état prédéfini indiquant que le courant mesuré présente une valeur égale à une valeur seuil maximale prédéterminée admissible dans l'interrupteur, configurés pour générer le signal de niveau à l'état prédéfini si, lors d'une période de temps au début d'une période de commutation de l'interrupteur, le courant mesuré présente une valeur égale à la valeur seuil maximale prédéterminée, la génération du signal de niveau à l'état prédéfini n'étant mise en œuvre que lors de cette période de temps et cette période de temps étant strictement inférieure à la période de conduction de l'interrupteur, la période de conduction de l'interrupteur étant la période de temps pendant laquelle un courant circule dans l'interrupteur ; et
- des moyens de sélection d'une fréquence de commutation maximale correspondant à la fréquence à laquelle est commandé l'interrupteur lorsque le signal de niveau est généré à l'état prédéfini par les moyens de génération.

Selon une caractéristique, le dispositif de détermination comporte en outre des moyens de variation de la fréquence de commutation dans une plage de fréquences prédéterminée.

Selon une caractéristique, les moyens de mesure du courant sont associés à des moyens de détection d'un pic du courant.

Selon une caractéristique, les moyens de détection comprennent une diode du type Zener montée en parallèle d'un transformateur d'intensité, la tension en sortie du transformateur d'intensité étant représentative de la valeur du courant circulant dans l'interrupteur et la diode de roue libre.

Selon une caractéristique, la tension d'avalanche de la diode de type Zener est sensiblement égale à la valeur de la tension en sortie du transformateur d'intensité pour un courant sensiblement égal à la valeur seuil maximale prédéterminée.

Selon une caractéristique, les moyens de génération comportent un deuxième interrupteur commandé par un signal de commande ayant une période égale à la période de commutation.

Selon une caractéristique, les moyens de génération comportent des moyens de retard disposés entre le signal de commande et le deuxième interrupteur, les moyens de retard générant la période de temps au début d'une période de commutation de l'interrupteur.

Selon une caractéristique, les moyens de génération comportent en outre des moyens de maintien du signal de niveau audit état prédéfini indiquant que le courant mesuré présente une valeur égale à la valeur seuil maximale prédéterminée, pendant une période de commutation de l'interrupteur.

Le dispositif de détermination présente des caractéristiques et avantages analogues à ceux décrits précédemment en relation avec le procédé de détermination d'une puissance minimale continue induite dans un récipient.

La présente invention concerne, selon un troisième aspect, un appareil de cuisson à induction, comprenant au moins un foyer de cuisson associé à des moyens d'induction, et comportant un dispositif de détermination conforme à invention.

L'appareil de cuisson à induction comprend des moyens de contrôle du dispositif d'alimentation à onduleur adapté à contrôler la fréquence de commutation dans une plage de fonctionnement comprise entre une fréquence de commutation minimale, correspondant à une tension maximale applicable aux bornes de l'interrupteur, et une fréquence de commutation maximale déterminée par le procédé de détermination conforme à l'invention.

L'appareil de cuisson à induction présente des caractéristiques et avantages analogues à ceux décrits précédemment en relation avec le procédé de détermination d'une puissance minimale continue induite dans un récipient.

En particulier, cet appareil de cuisson à induction permet ainsi d'induire dans un récipient donné une puissance minimale continue de valeurs faibles, et par exemple de l'ordre de 250 W, en comparaison aux valeurs classiques, de l'ordre de 400 W, observées dans l'état de la technique.

Cette puissance minimale continue plus faible permet d'éviter ou de limiter fortement le découpage dans le temps de l'alimentation en puissance d'un récipient, même pour des puissances de consigne faibles.

En particulier, pour une puissance de consigne de 250 W, le dispositif d'alimentation à onduleur peut induire en continu cette puissance dans le récipient.

D'autres particularités et avantages de l'invention apparaîtront encore dans la description ci-après.

Aux dessins annexés, donnés à titre d'exemples non limitatifs :
[Fig. 1] la figure 1 est une vue schématique d'un appareil de cuisson à induction adapté à mettre en œuvre le procédé de détermination d'une puissance minimale continue conforme à l'invention ;
[Fig. 2] la figure 2 est un schéma illustrant un dispositif d'alimentation à onduleur de moyens d'induction associés à un récipient ;
[Fig. 3] la figure 3 est une courbe illustrant les variations des paramètres électriques dans le dispositif de la figure 2 commandé à une fréquence de commutation intermédiaire ;
[Fig. 4] la figure 4 est une vue analogue à la figure 3, le dispositif d'alimentation à onduleur de la figure 2 étant commandé à une première fréquence de commutation ;
[Fig. 5] la figure 5 est une vue analogue à la figure 4, le dispositif d'alimentation à onduleur de la figure 2 étant commandé à une fréquence de commutation maximale, supérieure à ladite première fréquence de commutation ;
[Fig. 6] la figure 6 est un schéma illustrant un dispositif de détermination d'une puissance minimale continue selon un mode de réalisation de l'invention ;
[Fig. 7] la figure 7 est un chronogramme illustrant les tensions aux bornes des composants du dispositif de la figure 6, commandé à une fréquence de commutation minimale ; et
[Fig. 8] la figure 8 est une vue analogue à la figure 7, le dispositif de la figure 5 étant commandé à une fréquence de commutation maximale.

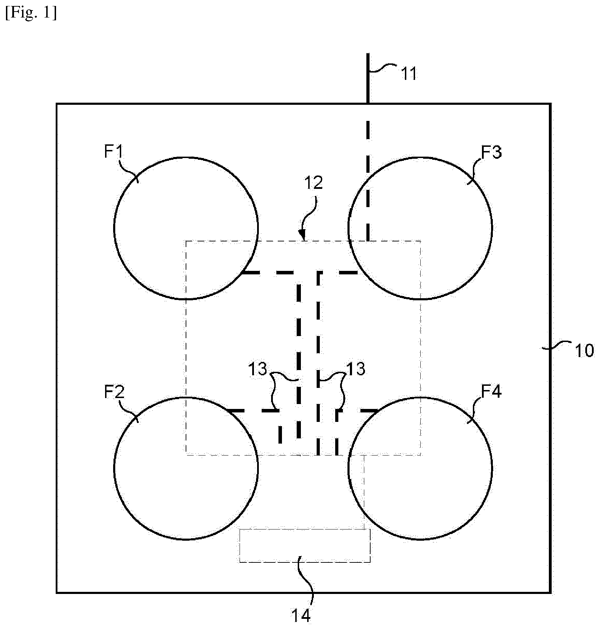

La **figure 1** représente un appareil de cuisson à induction adapté à mettre en œuvre la présente invention.

A titre d'exemple non limitatif, cet appareil de cuisson peut être une table de cuisson à induction 10 comprenant au moins un foyer de cuisson associé à des moyens d'induction.

Dans cet exemple, la table de cuisson 10 comporte quatre foyers de cuisson F1, F2, F3, F4, chaque foyer de cuisson étant associé à des moyens d'induction comprenant une ou plusieurs bobines d'induction.

Cette table de cuisson 10 comprend de manière classique une phase de puissance d'une alimentation électrique 11, typiquement une alimentation secteur.

A titre d'exemple, la table de cuisson 10 est alimentée en 32 A, pouvant fournir une puissance maximale de 7200 W à la table de cuisson 10, soit une puissance de 3600 W par phase.

On notera que les moyens d'induction associés à chaque foyer de cuisson F1, F2, F3, F4 peuvent en pratique être réalisés à partir d'une ou plusieurs bobines dans lesquelles circule le courant électrique, montées sur une phase de puissance.

Une carte de contrôle et de commande de puissance 12 permet de supporter l'ensemble des moyens électroniques et informatiques nécessaires au contrôle de la table de cuisson 10, et notamment à la détermination d'une puissance minimale continue selon le procédé qui sera décrit ci-après.

En pratique, des liaisons électriques 13 sont prévues entre cette carte de contrôle et de commande de puissance 12 et chaque foyer de cuisson F1, F2, F3, F4.

De manière classique, dans une telle table de cuisson 10, l'ensemble des moyens d'induction et la carte de contrôle et de commande 12 sont placés sous une surface plane de cuisson, par exemple réalisée à partir d'une plaque en vitrocéramique.

Les foyers de cuisson peuvent en outre être identifiés par une sérigraphie en vis-à-vis des bobines d'induction placées sous la surface de cuisson.

Bien entendu, bien qu'on ait illustré un exemple de réalisation de table de cuisson dans laquelle quatre zones de cuisson constituant des foyers de cuisson F1, F2, F3, F4 sont prédéfinies dans le plan de cuisson, la présente invention s'applique également à une table de cuisson ayant un nombre variable ou des formes différentes de foyer de cuisson, ou encore, présentant un plan de cuisson sans zones ou foyers de cuisson prédéfinis, ces derniers étant définis au cas par cas par la position du récipient en vis-à-vis d'un sous-ensemble de bobines d'induction disposées sous le plan de cuisson.

Finalement, la table de cuisson 10 comporte également des moyens de commande et d'interface 14 avec l'utilisateur permettant notamment à l'utilisateur de commander en puissance et en durée le fonctionnement de chaque foyer F1, F2, F3, F4.

En particulier, l'utilisateur peut par le biais des moyens de commande et d'interface 14 assigner une puissance de consigne à chaque foyer de cuisson recouvert d'un récipient.

La structure d'une telle table de cuisson et le montage des moyens d'induction n'ont pas besoin d'être décrits plus en détails ici.

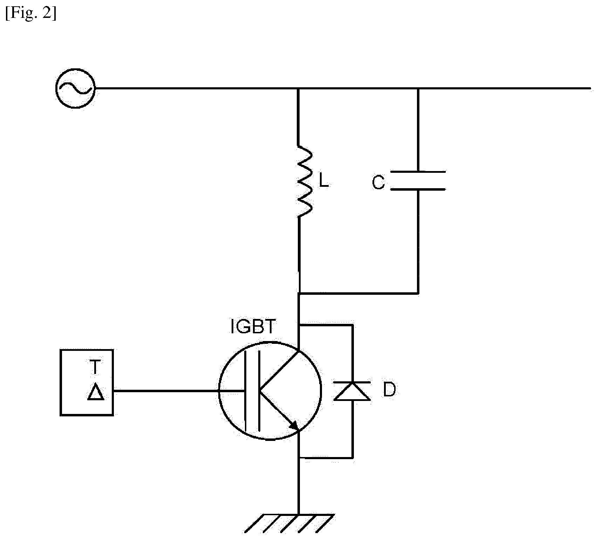

La **figure 2** illustre un mode de réalisation d'un dispositif d'alimentation à onduleur adapté à alimenter un des foyers de cuisson F1, F2, F3, F4, étant entendu que chaque foyer de cuisson peut présenter le même schéma d'alimentation.

Dans ce schéma, une inductance L représente à la fois l'inductance des moyens d'induction et celle du récipient à chauffer placé en vis-à-vis.

Le système constitué par le récipient et les moyens d'induction du foyer peut ainsi être schématisé par une inductance L.

Le circuit résonant comporte également un condensateur C monté en parallèle avec l'inductance L.

Le circuit résonant ainsi constitué est alimenté par un dispositif d'alimentation à onduleur comportant ici un unique interrupteur ou élément de puissance.

Cet interrupteur est par exemple un interrupteur du type d'un transistor commandé en tension, appelé dans la suite de la description interrupteur IGBT (acronyme du terme anglais "*Insulated Gate Bipolar Transistors*").

Cet interrupteur IGBT est monté en série avec le circuit résonant L, C et une diode de roue libre D est montée en parallèle avec l'interrupteur IGBT.

Le montage d'un tel dispositif d'alimentation à onduleur, comportant l'interrupteur IGBT et la diode de roue libre D, et commandé selon une fréquence de commutation (ou période de commutation ou commande T) est utilisé communément dans le domaine des appareils de cuisson à induction et n'a pas besoin d'être décrit plus en détails ici.

En particulier, le dispositif d'alimentation à onduleur est contrôlé par la fréquence de commutation, pouvant varier dans une plage de fonctionnement.

Cette plage de fonctionnement est définie d'une part par une fréquence de commutation minimale, correspondant à une puissance maximale continue, pouvant être induite dans le récipient.

Cette puissance maximale continue est limitée par la tension maximale pouvant être admise aux bornes de l'interrupteur IGBT, entre le collecteur et l'émetteur de cet interrupteur.

D'autre part, la plage de fonctionnement est limitée par une fréquence de commutation maximale telle que déterminée par le procédé de détermination conforme à l'invention décrit ci-après.

Les moyens de contrôle du dispositif d'alimentation à onduleur peuvent être intégrés à la carte de contrôle et de commande de puissance 12 de la table de cuisson 10.

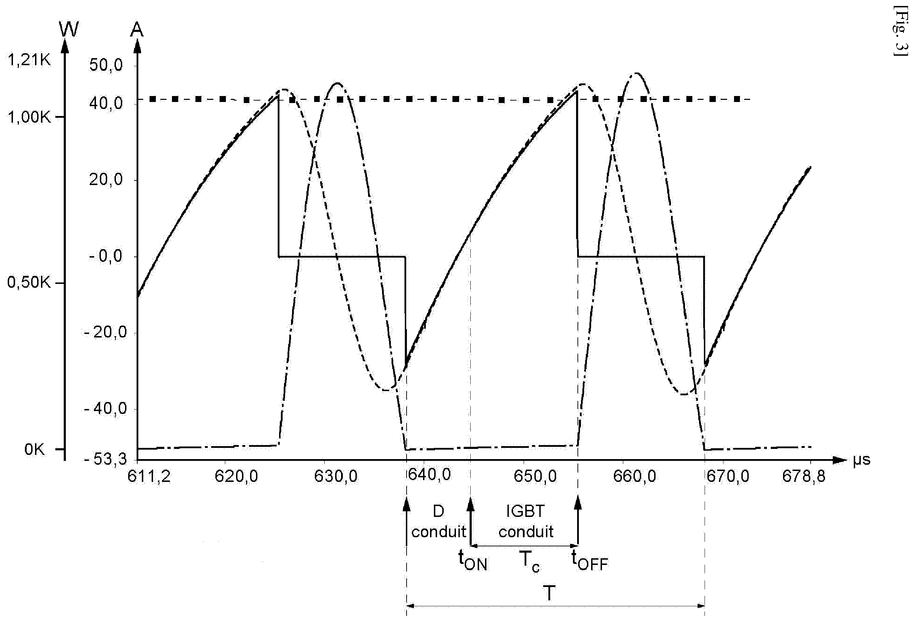

Le fonctionnement du dispositif d'alimentation à onduleur ayant un interrupteur IGBT unique est décrit ci-dessous en référence à la figure 3.

A la **figure 3**, les courants dans l'interrupteur IGBT et la diode de roue libre D sont illustrés en trait continu et les courants dans l'inductance L sont schématisés en trait pointillé.

En début de période de commande de l'IGBT, c'est-à-dire à la commutation de l'interrupteur IGBT, la diode de roue libre D est passante et un courant négatif circule dans l'inductance L et la diode de roue libre D.

Pendant une seconde partie de la période de commutation de l'interrupteur IGBT, l'interrupteur IGBT devient passant et un courant positif circule dans l'inductance L et l'interrupteur IGBT. La période pendant laquelle l'interrupteur est passant est nommée période de conduction (Tc) de l'interrupteur IGBT (période entre t_{ON} et t_{OFF}). On notera que l'interrupteur IGBT devient passant lorsqu'il est commandé ou mis sur ON.

Puis à la fin de la période de conduction Tcde l'interrupteur IGBT (instant t_{OFF} correspondant à la mise OFF de l'interrupteur IGBT, l'interrupteur IGBT est bloqué de telle sorte que le courant circule dans l'inductance L et le condensateur de résonance C.

Ainsi, pour chaque période de commande ou commutation T, l'interrupteur IGBT conduit le courant pendant une période de conduction Tc, fonction du rapport cyclique Δ, caractéristique de l'interrupteur IGBT, et de la période de commande T.

On a illustré à la figure 3, pour un récipient donné, un exemple de fonctionnement du dispositif d'alimentation à onduleur dans lequel la fréquence de commutation est égale à 33 kHz.

Comme bien illustré par la courbe en trait mixte, la tension aux bornes de l'interrupteur IGBT est proche de 1200 V, correspondant ici à une tension maximale admise aux bornes de l'interrupteur IGBT.

Le courant circulant dans l'inductance L est donc maximal et permet d'annuler la tension aux bornes de l'interrupteur IGBT.

Par conséquent, en début de période de commutation T, un courant circule dans la diode de roue libre D à l'instant où la tension aux bornes de l'interrupteur IGBT s'annule.

A la fréquence de commutation illustrée à la figure 3, proche de 33 kHz, le courant circulant dans l'inductance L étant maximal, la puissance induite dans le récipient est proche de la puissance continue maximale pouvant être induite dans le récipient, ici de l'ordre de 1100 W (courbe en trait pointillé-carré).

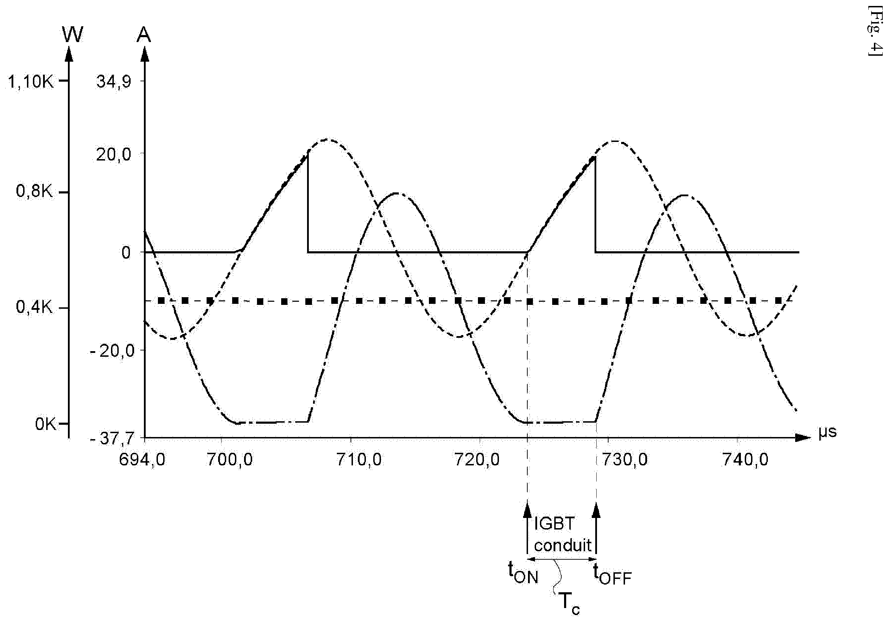

La **figure 4** illustre des courbes analogues à celles de la figure 3, la fréquence de commutation étant augmentée, et par exemple, sensiblement égale à 45 kHz.

Comme bien illustré à la figure 4, cette fréquence de commutation correspond ainsi à une première fréquence de commutation à laquelle le courant circulant dans le système est juste suffisant pour annuler la tension aux bornes de l'interrupteur IGBT.

On constate alors à la figure 4 que le courant circulant dans la diode de roue libre D devient quasiment nul à l'instant où la tension aux bornes de l'interrupteur IGBT s'annule.

La puissance continue induite dans le récipient est alors ici sensiblement égale à 400 W.

Cette puissance continue induite correspond ainsi à une première fréquence de commutation pour laquelle la diode de roue libre D ne conduit plus en début de période de commutation, mais où la tension aux bornes de l'interrupteur IGBT est sensiblement nulle.

On notera que dans l'exemple représenté par la figure 4, l'interrupteur IGBT est commandé ou mis sur ON (ou mis en conduction), au début de la période de commutation.

La présente invention a pour but de diminuer cette puissance continue admise dans le récipient en tolérant un pic de courant dans l'interrupteur IGBT en début de période de commutation.

En effet, l'interrupteur IGBT est capable de supporter des pics de courant importants dès lors que ce pic de courant est limité dans le temps.

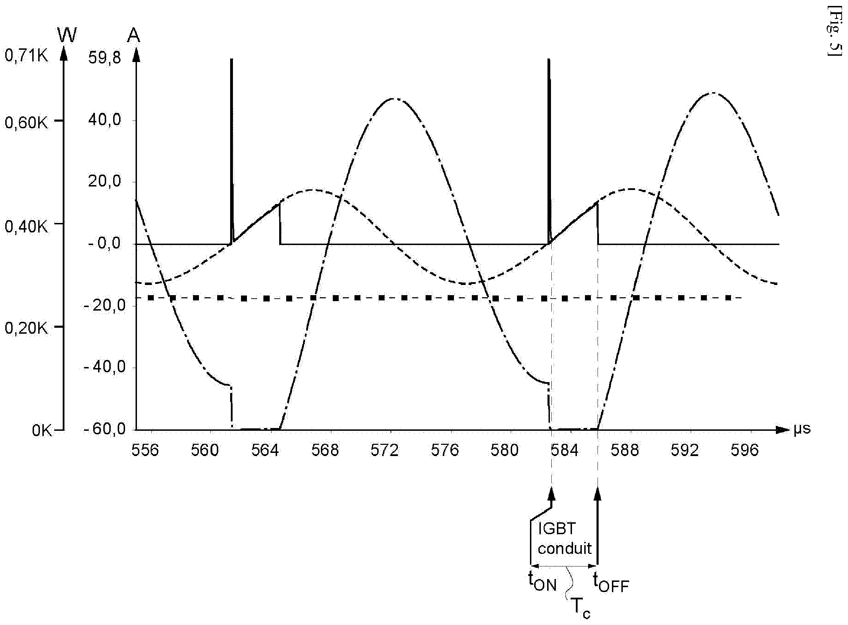

La **figure 5** illustre, de manière analogue aux figures 3 et 4 décrites précédemment, le comportement du système de la figure 2 lorsque la fréquence de commutation est augmentée au-delà de la première fréquence de commutation décrite en référence à la figure 4.

Dans cet exemple, et de manière non limitative, la fréquence de commutation est sensiblement égale à 48 kHz.

Comme bien illustré à la figure 5, le courant circulant dans l'inductance L est trop faible pour annuler la tension aux bornes de l'interrupteur IGBT.

Par conséquent, en début de période de commutation, à la mise ON ou commande de l'interrupteur IGBT, la tension aux bornes de l'IGBT n'est pas nulle de telle sorte qu'un pic de courant circule dans l'interrupteur IGBT, le courant circulant dans la diode de roue libre D demeurant nul.

On notera que, comme dans le cas représenté à la figure 4, l'interrupteur IGBT est commandé ou mis sur ON en début de période de commutation.

Dans l'exemple illustré à la figure 5, le pic de courant est sensiblement égal à 60 A.

Bien entendu, la valeur du pic de courant peut présenter des valeurs différentes. En effet, la valeur du pic de courant admissible dans l'interrupteur IGBT dépend des caractéristiques de l'interrupteur IGBT, et notamment de son aptitude à tolérer une surintensité importante.

Dans l'exemple à la figure 5, en tolérant un pic de courant de 60 A dans l'interrupteur IGBT en début de période de commutation, il est possible de commander le système à une fréquence de commutation de 48 kHz permettant d'induire dans le récipient une puissance continue faible, de l'ordre de 250 W.

Ainsi, en tolérant un pic de courant dans l'interrupteur IGBT, il est possible d'abaisser la puissance minimale continue admissible dans le récipient.

La plage de fonctionnement du dispositif d'alimentation à onduleur, à unique interrupteur IGBT, est ainsi étendue, dès lors que la puissance minimale continue induite dans le récipient associé aux moyens d'induction est diminuée.

La réduction de la puissance minimale continue permet d'obtenir à de faibles puissances de consigne une cuisson continue dans le récipient.

Ainsi, lorsque la puissance de consigne est fixée à 250 W, le système est capable de fournir en continu une puissance de 250 W. Si la puissance minimale continue est de 400 W, celle-ci doit être découpée dans le temps pour atteindre en moyenne la puissance de consigne de 250 W.

En limitant le découpage dans le temps du fonctionnement du dispositif d'alimentation à onduleur, le niveau de bruit est réduit.

Finalement, le chauffage en continu à une puissance faible, de l'ordre de 250 W, est mieux ressenti par l'utilisateur qui n'est pas confronté à un chauffage par à-coups du contenu du récipient.

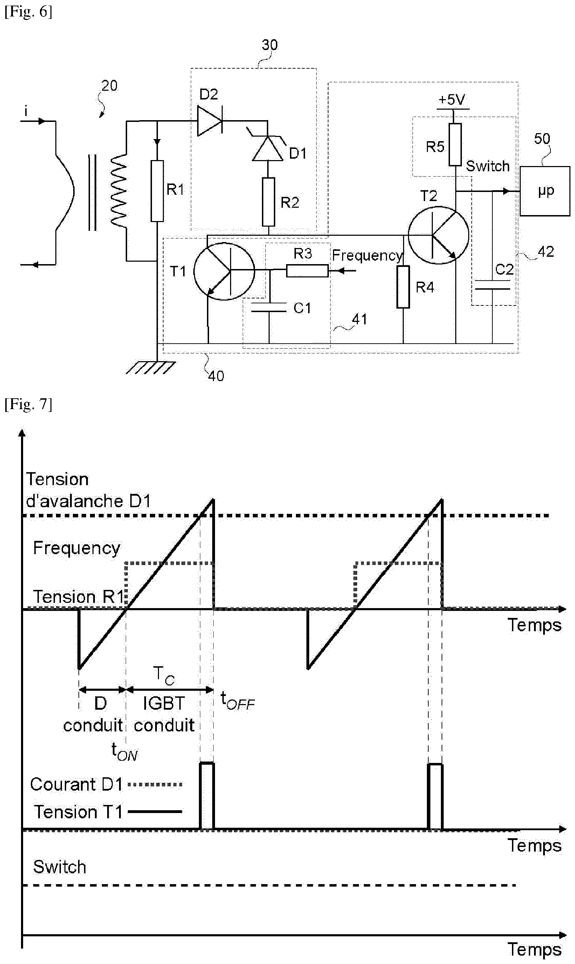

La **figure 6** illustre un mode de réalisation d'un dispositif de détermination d'une puissance minimale continue associé à un dispositif d'alimentation tel qu'illustré précédemment à la figure 2.

Ce dispositif de détermination comprend en particulier des moyens de mesure du courant i circulant dans l'interrupteur IGBT et la diode de roue libre D.

Dans ce mode de réalisation, ces moyens de mesure du courant sont réalisés au moyen d'un transformateur d'intensité 20.

Bien entendu, d'autres moyens de mesure de courant peuvent être utilisés, et notamment un shunt.

Dans l'exemple illustré à la figure 6, la valeur de la tension aux bornes d'une résistance de charge R1, placée en sortie du transformateur d'intensité 20, correspond à l'image du courant i circulant dans l'interrupteur IGBT ou la diode de roue libre D.

Ces moyens de mesure 20 sont associés à des moyens de détection 30 d'un pic du courant i circulant dans l'interrupteur IGBT.

Ces moyens de détection 30 comprennent notamment une diode du type Zener D1 montée en parallèle du transformateur d'intensité 20.

La tension d'avalanche de la diode de type Zener D1 est sensiblement égale à la valeur de la tension en sortie du transformateur d'intensité 20 lorsque le courant i circulant dans l'interrupteur IGBT est sensiblement égal à une valeur seuil maximale prédéterminée, admissible dans l'interrupteur IGBT.

Bien entendu, cette diode Zener D1 pourrait être remplacée par une diode Transil® dans les moyens de détection 30 du pic de courant.

Les moyens de détection 30 comportent, en outre, une seconde diode D2 montée en série avec la diode Zener D1 et en opposition par rapport à la diode Zener D1.

Les moyens de détection 30 comportent en outre une résistance R2, montée en série avec les deux diodes D1, D2.

Des moyens de génération 40 d'un signal de niveau SWITCH sont associés aux moyens de détection 30. Les moyens de génération 40 sont configurés pour générer un signal de niveau SWITCH destiné à informer à des moyens de contrôle, typiquement réalisés par un microprocesseur 50, si le courant i circulant dans l'interrupteur a atteint ou pas la valeur seuil maximale prédéterminée.

Les moyens de génération 40 comportent un deuxième interrupteur T1 commandé par un signal de commande FREQUENCY ayant une période égale à la période de commutation T et étant représentative de la commande de l'interrupteur IGBT.

Le deuxième interrupteur T1 est monté en série de la résistance R2 et des deux diodes D1, D2 formant un circuit en parallèle avec le transformateur d'intensité 20.

Dans le mode de réalisation décrit, le deuxième interrupteur T1 est un transistor bipolaire du type NPN.

Les moyens de génération 40 comportent en outre des moyens de retard 41 montés entre le signal de commande FREQUENCY et le deuxième interrupteur T1.

Dans le mode de réalisation représenté, les moyens de retard 41 sont reliés à la base b du deuxième transistor T1.

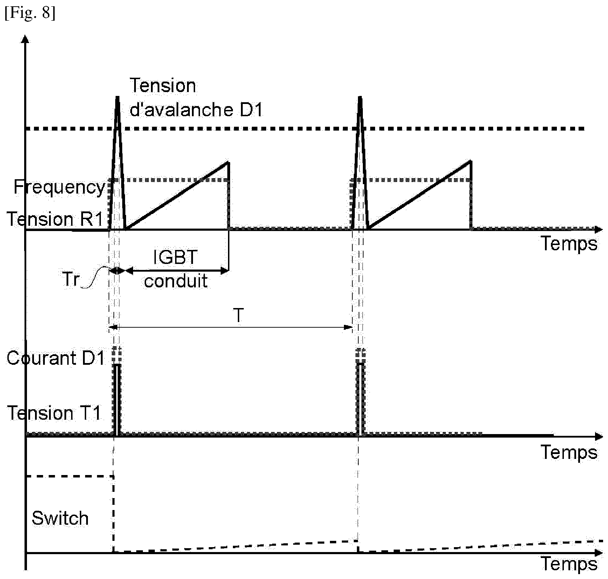

Les moyens de retard 41 sont configurés pour générer une période de temps Tr (illustrée à la figure 8) au début d'une période de commutation T de l'interrupteur IGBT.

Les moyens de retard 41 comportent une résistance de retard R3 reliée par une première borne à la base du deuxième transistor T1, et un condensateur de retard C1 monté entre la base et l'émetteur du deuxième transistor T1. Le signal de commande FREQUENCY est appliqué à la seconde borne de la résistance de retard R3.

Les moyens de génération 40 comportent en outre un troisième interrupteur T2, étant dans ce mode de réalisation un transistor bipolaire du même type que le deuxième transistor T1, c'est-à-dire de type NPN.

Le troisième transistor T2 est monté entre une résistance de pull-up R5 et le potentiel de référence. La base du troisième transistor T2 est relié au collecteur du deuxième transistor T1 et à la résistance R2 des moyens de détection 30.

Le signal de niveau SWITCH est pris entre le troisième transistor T2 (son collecteur) et la résistance de pull-up R5.

Finalement, un condensateur de sortie C2 est monté à la sortie du troisième transistor T2, en parallèle. Le condensateur de sortie C2 forme avec la résistance de pull-up R5 des moyens de maintien 42 du signal de niveau SWITCH à un état prédéfini indiquant que le courant i circulant dans l'interrupteur IGBT présente une valeur égale à la valeur seuil maximale prédéterminée. Le condensateur de sortie C2 et la résistance de pull-up R5 présentent des valeurs telles que le signal de niveau SWITCH reste à l'état prédéfini pendant une période de commutation (ou de découpage) de l'interrupteur IGBT.

On va décrire à présent le fonctionnement des moyens de détection 30 d'un pic du courant circulant dans l'interrupteur IGBT et des moyens de génération 40 d'un signal de niveau SWITCH.

Les moyens de détection 30 sont configurés pour détecter un courant i dont la valeur est sensiblement égale à la valeur seuil maximale prédéterminée, correspondant à la valeur de courant admissible dans l'interrupteur IGBT.

Cette valeur seuil maximale prédéterminée est strictement positive.

Pour des interrupteurs IGBT classiques, cette valeur seuil maximale prédéterminée est supérieure ou égale à 40 A, et de préférence supérieure à 60 A.

En effet, en tolérant une valeur seuil maximale prédéterminée importante dans l'interrupteur IGBT, il est possible d'augmenter la fréquence de commutation de manière significative, et ainsi, de diminuer significativement la puissance minimale continue induite dans le récipient associé aux moyens d'induction.

Les moyens de génération 40 sont configurés pour générer un signal de niveau SWITCH indiquant si les moyens de détection 30 ont détecté ou pas un pic de courant égal à la valeur seuil maximale prédéterminée.

Ainsi, le signal de niveau SWITCH est destiné à informer aux moyens de contrôle 50, si le courant i circulant dans l'interrupteur IGBT atteint ou pas la valeur seuil maximale prédéterminée.

Dans le mode de réalisation représenté, si un pic de courant égal à la valeur seuil maximale prédéterminée est détecté lors d'une période de temps Tr au début de la période de commutation T, le signal de niveau SWITCH est à l'état bas. Dans le cas contraire, le signal de niveau SWITCH est à l'état haut.

Comme il sera décrit ci-dessous, les moyens de génération 40 sont contrôlés par un signal de commande FREQUENCY. Le signal de commande FREQUENCY est indicatif de la commande ou mise sur ON de l'interrupteur IGBT. Le signal de commande FREQUENCY présente un premier état lorsque l'interrupteur est commandé ou mis en conduction, et un second état lorsque l'interrupteur IGBT ne conduit pas.

Dans un mode de réalisation, le premier état est un état haut et le second état est un état bas.

Dans des cas où la diode de roue libre D conduit en début de période de commutation T (tels que l'exemple illustré par le figure 3), le signal de commande FREQUENCY passe à l'état haut après la mise en conduction de la diode de roue libre D et au plus tard à l'instant auquel la diode de roue libre D arrête de conduire. En effet, l'interrupteur IGBT est commandé ou dévient passant à un instant compris entre le début et la fin de la conduction de la diode de roue libre D.

Dans un mode de réalisation, le signal de commande FREQUENCY est un signal ayant une période égale à la période de commutation T et correspond au signal de commande de l'interrupteur IGBT.

Autrement dit, le signal de commande FREQUENCY se trouve dans le premier état lorsque l'interrupteur IGBT se trouve en état ON et dans le second état lorsqu'il se trouve en état OFF.

Lorsque la diode de roue libre est passante, et qu'un courant circule dans cette diode de roue libre D, la tension aux bornes de la résistance de charge R1 est négative.

Compte tenu du montage de la diode D2, dans les moyens de détection 30, cette diode D2 est bloquée.

Par conséquent, quel que soit l'état du signal de commande FREQUENCY, le troisième transistor T2 est bloqué et le signal de niveau SWITCH est par conséquent à l'état haut.

Lorsque l'interrupteur IGBT est passant, la tension aux bornes de la résistance de charge R1 est positive. Tant que la valeur du courant i dans l'interrupteur IGBT est inférieure à la valeur seuil maximale prédéterminée, la diode de type Zener D1 est bloquée du fait du choix spécifique de sa tension d'avalanche tel que décrit précédemment.

En revanche, lorsque la valeur du courant i circulant dans l'interrupteur IGBT atteint la valeur seuil maximale prédéterminée, la tension aux bornes de la résistance de charge R1 devient supérieure à la tension d'avalanche de la diode Zener D1.

La diode de type Zener D1 devient alors passante.

On notera que l'interrupteur IGBT est passant pendant une période de temps nommé période de conduction Tc.

Dans un mode de réalisation, la période de conduction Tc présente une valeur d'environ 10 microsecondes, c'est-à-dire que l'interrupteur IGBT est passant pendant 10 microsecondes.

Lorsque la période de conduction Tc commence, c'est-à-dire lorsque l'interrupteur IGBT est commandé ou mis sur ON , le signal de niveau FREQUENCY est à l'état haut.

On notera que, comme indiqué ci-dessus, dans certains cas, en début de période de commutation T, la diode de roue libre D se met en état de conduction (voir figure 3) avant que l'interrupteur IGBT ne conduise, et dans d'autres cas l'interrupteur se met directement en conduction (voir figures 4 et 5).

Lorsque le signal de commande FREQUENCY se trouve à l'état haut, les moyens de retard 41 comportant le condensateur C1 et la résistance R3, introduisent un temps de retard sur le signal de commande FREQUENCY qui contrôle le fonctionnement du deuxième interrupteur ou transistor T1.

On notera que les valeurs de la résistance R3 et du condensateur C1 sont sélectionnées de manière à ce que le deuxième transistor T1 ne devienne passant qu'après un délai prédéfini par rapport au passage à l'état haut du signal de commande FREQUENCY. Autrement dit, les moyens de retard 41 introduisent un retard sur le signal de commande FREQUENCY.

Ce temps de retard correspond à la période de temps Tr (visible sur la figure 8) en début de la période de commande T de l'interrupteur IGBT (dans le cas représenté à la figure 8, la période de conduction Tc de l'interrupteur IGBT débute en même temps que la période de commutation T).

La période de temps Tr est inférieure à la période de conduction Tc de l'interrupteur IGBT.

Le premier pic de courant généré dans l'interrupteur à la mise sur ON de celui-ci a lieu en général dans les 0.5 microsecondes suivant la mise sur ON. Ceci est constaté par l'homme du métier connaissant les dispositifs d'alimentation à onduleur tel que celui représenté à la figure 2.

Cette période pendant lequel a lieu le premier pic de courant est nommée Tpic (visible sur la figure 8) et correspond à la valeur minimale de la période de temps Tr en début de la période de commande.

Dans un mode de réalisation, la période de temps Tr est comprise entre une valeur minimale correspondant à la période minimale Tpic, et une valeur maximale strictement inférieure à la période de conduction Tc de l'interrupteur IGBT. La période minimale Tpic correspond à la période de temps pendant laquelle le premier pic de courant généré dans l'interrupteur à la mise en ON de celui-ci peut avoir lieu.

A titre d'exemple nullement limitatif, la période de temps Tr est comprise entre 1 et 10 microsecondes, et présente une valeur de préférentiel de 5 microsecondes.

Pendant que le deuxième transistor T1 n'est pas passant, et que la diode de type Zener D1 est passante du fait que le courant i dans le transistor IGBT est supérieur à la tension d'avalanche de la diode de type Zener D1, un courant circule à travers la résistance R2 des moyens de détection 20 et se dirige à la base du troisième transistor T2.

Ce troisième transistor T2 devient ainsi passant et le signal de niveau SWITCH passe à l'état bas, cet état indiquant que le courant i circulant dans l'interrupteur IGBT présente une valeur égale à la valeur seuil maximale prédéterminée.

Les moyens de maintien 42 formés par le condensateur de sortie C2 et la résistance de pull-up R5 montée en sortie du troisième transistor T2, sont sélectionnés de manière à ce que le signal de niveau SWITCH reste à l'état bas pendant au moins une période de commande T de l'interrupteur IGBT.

Ainsi, le microprocesseur 50 peut, à partir de l'état du signal de niveau SWITCH, détecter le pic de courant dans l'interrupteur IGBT, correspondant à une valeur de courant atteignant la valeur seuil maximale prédéterminée, générée pendant la période de temps Tr au début de la période de commande T de l'interrupteur IGBT.

Le microprocesseur 50 peut commander la variation de la fréquence de commutation, à travers des moyens de commande du dispositif d'alimentation à onduleur, et sélectionner la fréquence de commutation maximale, correspondant au passage du signal de niveau SWITCH à l'état bas.

Bien entendu, les transistors T1 et T2 peuvent être d'autres types, et les états des signaux de contrôle FREQUENCY et de niveau SWITCH seraient ainsi adaptés aux types de transistors employés.

La **figure 7** illustre l'image de la tension aux bornes de la résistance de charge R1, le courant traversant la diode de type Zener D1, la tension collecteur-émetteur du deuxième transistor T1 et le signal de niveau SWITCH.

Dans l'exemple représenté, la tension aux bornes de la résistance de charge R1 est supérieure à la tension d'avalanche de la diode de type Zener D1 en fin de la période de conduction Tc de l'interrupteur IGBT.

Comme illustré à la figure 7, lorsque la tension aux bornes de la résistance de charge R1 dépasse la tension d'avalanche de la diode de type Zener D1, la diode de type Zener D1 devient passante.

En outre, la tension collecteur-émetteur du deuxième transistor T1 reste nulle du fait que le signal de commande FREQUENCY est à l'état haut, le deuxième transistor T1 étant passant.

Dans ces conditions, le signal de niveau SWITCH reste à l'état haut.

On notera que dans l'exemple illustré par la figure 7, le front montant du signal FREQUENCY correspondant à la commande de l'interrupteur IGBT, correspond à l'instant auquel la diode de roue libre D arrête sa conduction. Cet exemple représente ainsi, un cas dans lequel la période de conduction Tc de l'interrupteur IGBT est minimale.

Bien entendu, la commande de l'interrupteur IGBT, et par conséquent le front montant du signal FREQUENCY pourrait survenir avant la fin de la conduction de la diode de roue libre D.

La **figure 8** illustre les mêmes paramètres lorsque la tension aux bornes de la résistance de charge R1 dépasse la tension d'avalanche de la diode Zener D1 en début de la période de commande T. Dans le cas représenté un pic de courant se produit à la mise sur ON de l'interrupteur IGBT sur une période de temps Tr minimale ou Tpic.

On notera en particulier que le pic du courant observé dans l'interrupteur IGBT à la mise sur ON de celui-ci est indépendant du récipient placé en vis-à-vis des moyens d'induction. En effet, ce pic de courant est dû à la décharge du condensateur C dans le circuit résonnance comme indiqué précédemment.

Comme illustré sur la figure 8, du fait du pic de tension observé aux bornes de la résistance de charge R1, la diode de type Zener D1 est passante, c'est-à-dire qu'un courant circule à travers elle. En outre, la tension collecteur-émetteur du deuxième transistor T1 présente une valeur supérieure à zéro. Une fois que la période de temps Tr est finie, le signal de commande FREQUENCY passe à l'état haut, le deuxième transistor T1 devient passant et sa tension du collecteur-émetteur devient zéro.

Au moment où la diode de type Zener D1 devient passante et qu'une tension est présente entre le collecteur et l'émetteur du deuxième transistor T1, le signal de niveau SWITCH passe à l'état bas comme il peut être visualisé à la figure 8.

C'est à ce moment-là que la valeur seuil maximale prédéterminée admissible dans l'interrupteur IGBT, peut être mémorisée dans l'appareil de cuisson pour être utilisée valablement quel que soit le récipient placé en vis-à-vis des moyens d'induction afin de déterminer la puissance minimale continue induite dans ce récipient.

En pratique, dans un appareil de cuisson à induction tel qu'illustré à la figure 1, lorsqu'un nouveau récipient est détecté en regard d'un des foyers F1, F2, F3, F4, l'appareil de cuisson à induction est adapté à mettre en œuvre le procédé de détermination de la puissance minimale continue admissible dans ce récipient selon le procédé décrit précédemment.

Ainsi, le courant dans l'interrupteur IGBT et la diode de roue libre D sont surveillés grâce aux moyens de détection 30 illustrés à la figure 6, la fréquence de commutation variant dans une plage de fréquence prédéterminée.

Dans l'exemple décrit précédemment, la fréquence de commutation varie ainsi dans une plage comprise sensiblement entre 30 kHz et 50 kHz.

Les moyens de variation de la fréquence de commutation sont intégrés aux moyens de contrôle du dispositif d'alimentation à onduleur.

En faisant varier la fréquence de commutation et en surveillant la valeur du courant mesuré dans l'interrupteur IGBT, par comparaison avec la valeur seuil maximale prédéterminée, il est possible de sélectionner la fréquence de commutation maximale, correspondant à un pic de courant admissible dans l'interrupteur IGBT.

En particulier, on notera que la fréquence de commutation est augmentée progressivement au-delà de la première fréquence de commutation, correspondant à une fréquence de commutation pour laquelle le courant circulant dans la diode de roue libre D est sensiblement nul au moment où la tension aux bornes de l'interrupteur IGBT s'annule.

Lorsque la valeur de la fréquence de commutation maximale est déterminée, une étape de mémorisation de la valeur de la fréquence de commutation maximale est mise en œuvre, de manière à être prise en compte dans un processus de commande de la puissance fournie par les moyens d'induction du récipient, en fonction d'une puissance de consigne.

En particulier, tant que la puissance de consigne reste supérieure à la puissance minimale continue pouvant être induite dans le récipient, il est possible de fournir cette puissance en continu.

En revanche, si la puissance de consigne devient inférieure à la puissance minimale continue déterminée en relation avec la fréquence de commutation maximale, l'alimentation en puissance du récipient doit alors être découpée dans le temps pour atteindre en moyenne la puissance de consigne demandée.

Grâce à l'invention, en abaissant la puissance minimale continue induite dans un récipient, il est possible de limiter le fonctionnement par découpage du dispositif d'alimentation à onduleur. En outre, la puissance minimale induite dans un récipient est déterminée de manière optimale dès lors que seuls les pics de courant atteignant la valeur seuil maximale en début des périodes de commutation de l'interrupteur IGBT sont pris en compte pour cette détermination.

Bien entendu, le dispositif de détermination d'une puissance minimale continue n'est pas limité à l'exemple de réalisation décrit précédemment.

En particulier, d'autres moyens de détection d'un pic de courant dans l'interrupteur IGBT pourraient être mis en œuvre pour surveiller la valeur du courant circulant dans l'interrupteur IGBT.

On notera en outre que la tension d'avalanche associée à la diode de type Zener doit de préférence correspondre à un pic de courant de valeur supérieure au courant maximum pouvant circuler dans l'interrupteur IGBT afin de ne pas perturber la mesure des courants aux bornes de l'interrupteur IGBT et de la diode de roue libre D, qui peut être mise en œuvre indépendamment, pour connaître la valeur du courant instantané circulant dans le dispositif d'alimentation à onduleur, par exemple pour en déduire la puissance instantanée fournie par ce dispositif au récipient placé en vis-à-vis des moyens d'induction.

## Revendications

1. Procédé de détermination d'une puissance minimale continue induite dans un récipient associé à des moyens d'induction, les moyens d'induction étant intégrés à un circuit résonant (L,C) alimenté par un dispositif d'alimentation à onduleur comportant un interrupteur (IGBT) monté en série avec le circuit résonant (L,C) et une diode de roue libre (D) montée en parallèle avec l'interrupteur (IGBT), l'interrupteur (IGBT) étant commandé à une fréquence de commutation, le procédé de détermination étant **caractérisé en ce qu'**il comprend les étapes suivantes :
- mesure d'un courant (i) circulant dans l'interrupteur (IGBT) et la diode de roue libre (D) ;
- génération d'un signal de niveau (SWITCH) à un état prédéfini indiquant que le courant mesuré (i) présente une valeur égale à une valeur seuil maximale prédéterminée admissible dans l'interrupteur (IGBT), si, lors d'une période de temps (Tr) au début de la période de commutation (T) de l'interrupteur (IGBT), ledit courant mesuré (i) présente une valeur égale à la valeur seuil maximale prédéterminée, la génération n'étant mise en œuvre que lors de ladite période de temps (Tr) et ladite période de temps (Tr) étant strictement inférieure à la période de conduction (Tc) de l'interrupteur (IGBT), la période de conduction (Tc) de l'interrupteur (IGBT) étant la période de temps pendant laquelle un courant (i) circule dans l'interrupteur (IGBT) ; et
- sélection d'une fréquence de commutation maximale correspondant à la fréquence à laquelle est commandé l'interrupteur (IGBT) lorsque ledit signal de niveau (SWITCH) est généré audit état prédéfini.

2. Procédé de détermination conforme à la revendication 1, **caractérisé en ce qu'**il comporte une étape de variation de la fréquence de commutation dans une plage de fréquences déterminée.

3. Procédé de détermination conforme à la revendication 2, **caractérisé en ce que** la plage de fréquences est comprise entre une première fréquence de commutation et ladite fréquence de commutation maximale sélectionnée, la fréquence de commutation maximale étant supérieure à ladite première fréquence de commutation, ladite première fréquence de commutation correspondant à celle pour laquelle le courant circulant dans la diode de roue libre (D) est sensiblement nul au moment où la tension aux bornes de l'interrupteur (IGBT) s'annule.

4. Procédé de détermination conforme à l'une des revendications 1 à 3, **caractérisé en ce que** ladite période de temps (Tr) au début d'une période de commutation (T) présente une valeur comprise entre une valeur minimale correspondant à une période minimale (Tpic) pendant laquelle un premier pic de courant peut survenir à la commande de l'interrupteur (IGBT), et une valeur maximale strictement inférieure à la période de conduction (Tc) de l'interrupteur (IGBT).

5. Procédé de détermination conforme à l'une des revendications 1 à 4, **caractérisé en ce que** ladite période de temps (Tr) au début d'une période de commutation (T) présente une valeur comprise entre 1 et 5 microsecondes environ.

6. Procédé de détermination conforme à l'une des revendications 1 à 5, **caractérisé en ce que** ladite période de temps (Tr) correspond à un délai généré à partir d'un signal de commande (FREQUENCY) indicatif de la commande de l'interrupteur (IGBT).

7. Procédé de détermination conforme à la revendication 6, **caractérisé en ce que** le signal de commande (FREQUENCY) a une période égale à la période de commutation (T) et présente un premier état lorsqu'un courant circule dans l'interrupteur (IGBT) et un second état lorsqu'aucun courant ne circule dans l'interrupteur (IGBT).

8. Procédé de détermination conforme à l'une des revendications 1 à 7, **caractérisé en ce qu'**il comporte une étape de maintien dudit signal de niveau (SWITCH) audit état prédéfini indiquant que le courant mesuré (i) présente une valeur égale à la valeur seuil maximale prédéterminée, pendant une période de commutation (T) de l'interrupteur (IGBT).

9. Dispositif de détermination d'une puissance minimale continue induite dans un récipient associé à des moyens d'induction, lesdits moyens d'induction étant intégrés à un circuit résonant (L, C) alimenté par un dispositif d'alimentation à onduleur comportant un interrupteur (IGBT) monté en série avec le circuit résonant (L, C) et une diode de roue libre (D) montée en parallèle avec l'interrupteur (IGBT), l'interrupteur (IGBT) étant commandé à une fréquence de commutation, ledit dispositif de détermination étant **caractérisé en ce qu'**il comprend :
- des moyens de mesure (20) d'un courant (i) circulant dans ledit interrupteur (IGBT) et ladite diode de roue libre (D) ;
- des moyens de génération (40) d'un signal de niveau (SWITCH) à un état prédéfinie indiquant que le courant mesuré (i) présente une valeur égale à une valeur seuil maximale prédéterminée admissible dans l'interrupteur (IGBT), configurés pour générer ledit signal de niveau (SWITCH) audit état prédéfini si, lors d'une période de temps (Tr) au début d'une période de commutation (T) de l'interrupteur (IGBT), ledit courant mesuré présente une valeur égale à ladite valeur seuil maximale prédéterminée, la génération du signal de niveau (SWITCH) audit état prédéfini n'étant mise en œuvre que lors de ladite période de temps (Tr) et ladite période de temps (Tr) étant strictement inférieure à la période de conduction (Tc) de l'interrupteur (IGBT), la période de conduction (Tc) de l'interrupteur (IGBT) étant la période de temps pendant laquelle un courant (i) circule dans l'interrupteur (IGBT) ; et
- des moyens de sélection (50) d'une fréquence de commutation maximale correspondant à la fréquence à laquelle est commandé l'interrupteur (IGBT) lorsque ledit signal de niveau (SWITCH) est généré par lesdits moyens de génération (40) audit état prédéfini.

10. Dispositif de détermination conforme à la revendication 9, **caractérisé en ce qu'**il comporte en outre des moyens de variation (50) de la fréquence de commutation dans une plage de fréquences prédéterminée.

11. Dispositif de détermination conforme à l'une des revendications 9 ou 10, **caractérisé en ce que** lesdits moyens de mesure (20) du courant (i) sont associés à des moyens de détection (30) d'un pic dudit courant (i).

12. Dispositif de détermination conforme à la revendication 11, **caractérisé en ce que** les moyens de détection (30) comprennent une diode du type Zener (D1) montée en parallèle d'un transformateur d'intensité (20), la tension en sortie dudit transformateur d'intensité (20) étant représentative de la valeur du courant (i) circulant dans l'interrupteur (IGBT) et la diode de roue libre (D).

13. Dispositif de détermination conforme à la revendication 12, **caractérisé en ce que** la tension d'avalanche de la diode de type Zener (D1) est sensiblement égale à la valeur de la tension en sortie du transformateur d'intensité (20) pour un courant sensiblement égal à la valeur seuil maximale prédéterminée.

14. Dispositif de détermination conforme à l'une des revendications 9 à 13, **caractérisé en ce que** les moyens de génération (40) comportent un deuxième interrupteur (T1) commandé par un signal de commande (FREQUENCY) ayant une période égale à la période de commutation (T)

15. Dispositif de détermination conforme à la revendication 14, **caractérisé en ce que** les moyens de génération (40) comportent des moyens de retard (41) disposés entre ledit signal de commande (FREQUENCY) et ledit deuxième interrupteur (T1), lesdits moyens de retard (41) générant ladite période de temps (Tr) au début d'une période de commutation (T) de l'interrupteur (IGBT).

16. Dispositif de détermination conforme à l'une des revendications 9 à 15, **caractérisé en ce que** les moyens de génération (40) comportent en outre des moyens de maintien (42) dudit signal de niveau (SWITCH) audit état prédéfini indiquant que le courant mesuré (i) présente une valeur égale à la valeur seuil maximale prédéterminée, pendant une période de commutation de l'interrupteur (IGBT).

17. Appareil de cuisson à induction, comprenant au moins un foyer de cuisson (F1, F2, F3, F4) associé à des moyens d'induction, **caractérisé en ce qu'**il comporte un dispositif de détermination conforme à l'une des revendications 9 à 16.

18. Appareil de cuisson à induction conforme à la revendication 17, **caractérisé en ce qu'**il comprend des moyens de contrôle (12) du dispositif d'alimentation à onduleur adapté à contrôler la fréquence de commutation dans une plage de fonctionnement comprise entre une fréquence de commutation minimale, correspondant à une tension maximale applicable aux bornes de l'interrupteur, et une fréquence de commutation maximale déterminée par le procédé de détermination conforme à l'une des revendications 1 à 8.
